Europäisches Patentamt

European Patent Office

Office européen des brevets

(19)

(11) Numéro de publication : **0 512 893 A1**

## (12) DEMANDE DE BREVET EUROPEEN

(21) Numéro de dépôt : **92401214.9**

(51) Int. Cl.⁵ : **G02B 3/00, G02F 1/1335**

(22) Date de dépôt : **29.04.92**

(30) Priorité : **07.05.91 FR 9105606**

(43) Date de publication de la demande :
**11.11.92 Bulletin 92/46**

(84) Etats contractants désignés :
**DE GB IT NL**

(71) Demandeur : **THOMSON-CSF**
**51, Esplanade du Général de Gaulle**
**F-92800 Puteaux (FR)**

(72) Inventeur : **Lehureau, Jean-Claude**
**Thomson-CSF, SCPI - Cédex 67**
**F-92045 Paris La Défense (FR)**

(74) Mandataire : **Guérin, Michel et al**
**THOMSON-CSF SCPI**
**F-92045 PARIS LA DEFENSE CEDEX 67 (FR)**

(54) **Collecteur d'éclairage pour projecteur.**

(57)  La présente invention propose un dispositif collecteur d'éclairage comportant un premier réseau de lentilles (Lij1) et un second réseau de lentilles (Lij2) situé dans un plan tel que les faisceaux issus des lentilles (Lij1) sont séparés spatialement. Le deuxième réseau de lentilles (Lij2) peut être remplacé par un miroir (M) situé à mi-distance du seul réseau de lentilles et de son plan focal.

Application : Projecteurs de télévision utilisant une matrice à cristaux liquides.

FIG.4

EP 0 512 893 A1

L'invention concerne un projecteur d'Images et plus particulièrement un dispositif collecteur d'éclairage destiné à être employé notamment dans les projecteurs de télévision utilisant comme modulateur une matrice à cristaux liquides.

Le diagramme de rayonnement d'une source de lumière s'adapte mal, le plus souvent, à l'obtention de l'éclairement homogène d'un objet à projeter, sans perdre une part considérable de la lumière produite par la source, et ce d'autant plus que l'objet à projeter a un format très allongé comme un rectangle 16/9 (format très intéressant en télévision).

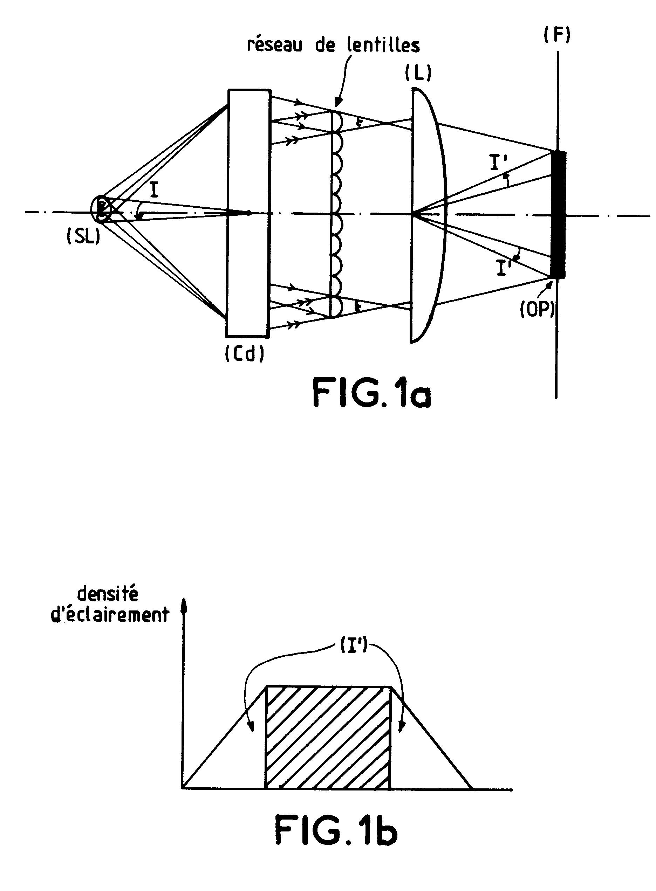

Actuellement les procédés de collection de la lumière utilisés présentent une efficacité très faible de l'ordre de 10 à 30 %. Ils peuvent consister à choisir le champ lointain de la source correspondant à une émission directionnelle de lumière plus homogène qu'en champ proche et à y découper par exemple un rectangle au format de l'image en faisant un compromis entre efficacité et vignetage (l'efficacité est de l'ordre de 50 % pour 30 % de perte d'éclairement sur les bords). Une solution intéressante a consisté en l'introduction. d'un réseau de lentilles permettant de découper en pavés une section de faisceau issu d'une source lumineuse, les pavés découpés grâce au format choisi des lentilles présentant le même format que l'objet à projeter. Cette solution permet de créer xy images de la source qui constituent xy petites sources dont partent des faisceaux lumineux plus homogènes que le faisceau incident issu de la source (SL) ; x est le nombre de lentilles par ligne du réseau, y est le nombre de lentilles par colonne. Elle présente l'avantage d'un bon compromis entre homogénéité et efficacité lumineuse avec toutefois encore des zones inhomogènes aux bords de l'objet à projeter. La figure 1a illustre un mode de réalisation ou de collecteur de lumière selon l'art connu et la figure 1b illustre la densité d'éclairement dans le plan focal (F) de la lentille (L). Dans cet exemple, une source classique lambertienne (SL) de luminance homogène dans l'espace est renvoyée sur un réseau de xy lentilles capables de générer xy images de la source. La source peut être renvoyée à l'infini par un condenseur (Cd) qui renvoie alors la lumière sur chaque lentille ; néanmoins l'étendue de la source n'étant pas négligeable, chaque lentille reçoit un flux lumineux issu de la source dans un angle solide d'incidence I, l'angle d'incidence I étant directement lié à la taille de la source. Chaque lentille génère un éclairement résultant de la convolution du champ proche de la source et de l'ouverture de chaque lentille. En utilisant une lentille de champ (L) en aval du réseau de lentilles, tous les éclairements issus des lentilles se recouvrent dans le plan focal F de la lentille (L) (figure 1a). Cependant l'éclairement fourni par chaque lentille n'est pas homogène : la seule partie homogène, correspond à la zone hachurée du diagramme d'éclairement illustré par la figure 1b, cette zone est la zone de recouvrement des rayons lumineux issus de tous les différents points de la source (qui n'est pas ponctuelle). De part et d'autre de cette zone seuls certains points de la source participent à l'éclairement.

La somme de tous les éclairements Issus de chaque lentille regardée dans le plan focal de la lentille (L) où l'on place l'objet à éclairer n'est pas non plus homogène car, quelle que soit la lentille, ce sont les mêmes points de la source qui ne participeront pas à l'éclairement des zones de part et d'autre de la zone de recouvrement. Il existe des zones (Z) de flux lumineux (inférieur au flux de la zone hachurée) définies par l'angle J = I sous lequel la source est vue depuis le collecteur de lumière. Si on veut bénéficier d'un éclairement maximal, il ne sera pas homogène (atténuation sur les bords). Si on veut un éclairement homogène de l'objet à projeter il est nécessaire de condamner les zones (Z) dans lesquelles une quantité importante de flux lumineux est concentrée, ceci entraînant une perte notable d'efficacité du dispositif de collection de lumière.

Pour diminuer de façon conséquente ces zones (Z) une solution consisterait à diminuer l'angle J en éloignant la source (SL) ou en utilisant une source plus ponctuelle. Cependant pour capter le maximum de flux lumineux, le collecteur de lumière doit être d'autant plus grand que la source est éloignée. Il n'est donc pas possible d'envisager une source très éloignée ni même une source quasi ponctuelle (en effet les sources dont on dispose sont généralement des lampes à arc).

C'est pourquoi pour pallier le problème de perte d'efficacité due à une partie d'éclairement inhomogène, la présente invention propose un nouveau collecteur de lumière pour projecteur d'images. Ce collecteur génère un diagramme d'émission proche de celui représenté à la figure 1 mais dans lequel l'angle J sous lequel décroît l'éclairement depuis la matrice de lentille devient nul malgré l'étendue de la source employée. Un tel collecteur présente le grand intérêt d'augmenter le flux lumineux homogène et trouve ainsi une application particulièrement intéressante dans les projecteurs de télévision utilisant un écran à cristaux liquides, projecteurs qui à l'heure actuelle présentent des flux lumineux encore faibles.

Ainsi en vue d'homogénéiser l'éclairement de l'objet sans perdre de flux lumineux l'invention propose de placer derrière le premier réseau de lentilles (Lij1), un deuxième réseau de lentilles (Lij2) dans un plan tel que les faisceaux issus de chacune des lentilles (Lij1) sont séparés spatialement, chaque lentille (Lij2) étant positionnée par rapport à une lentille (Lij1).

De préférence on propose un projecteur d'images comportant au moins une source de lumière, la source produisant une lumière destinée à éclairer un objet ayant une forme donnée et caractérisé en ce qu'il comprend un premier réseau de lentilles identiques (Lij1) et un deuxième réseau de lentille (Lij2), le deuxième réseau de lentilles (fij2) étant situé dans le plan focal du réseau de lentilles (Lij1), chaque lentille du second réseau a son axe optique confondu avec celui d'une lentille du premier réseau de façon à ce que les lentilles du deuxième réseau (Lij2) permettent d'imager exactement les lentilles (Lij1) sur l'objet à projeter et chaque lentille (Lij1) a la même focale que chaque lentille (LiJ2).

Par ce deuxième réseau, on modifie la direction des rayons lumineux issus du premier réseau, de telle manière que tous les rayons, quelle que soit leur origine, puissent venir se rejoindre dans une même zone de recouvrement, dans le plan focal d'une lentille de champ placée en aval du deuxième réseau.

Dans une variante, l'invention propose également un projecteur d'images comportant au moins une source de lumière, la source produisant une lumière destinée à éclairer un objet ayant une forme donnée et caractérisé en ce qu'il comprend un premier réseau de lentilles identiques (Lij) et un miroir (M), le miroir étant situé à mi-distance des lentilles (Lij) et de leur plan focal, de façon à imager les lentilles (Lij) sur l'objet à projeter. Autrement dit, le deuxième réseau est tout simplement le premier réseau lui-même dans lequel repassent à nouveau les rayons lumineux après s'être réfléchis dans le miroir.

De préférence le faisceau incident issu de la source et arrivant sur chaque lentille Lij fait un angle A non nul avec la normale au plan du réseau de lentilles de, façon à ce que le faisceau réfléchi homogène issu du miroir (M) soit séparé spatialement du faisceau incident.

De préférence les lentilles (Lij1), (LiJ2) ou (Lij) ont la forme de l'objet à projeter, plus précisément sont capables de générer un éclairement au format de l'objet à projeter. Ainsi dans le cas de la projection d'un écran à cristaux liquides de format 16/9, les lentilles sont telles qu'elles sont capables de générer des éclairements au format 16/9.

La présente invention sera mieux comprise et d'autres avantages apparaîtront à la lecture de la description qui suit, donnée à titre d'exemple non limitatif, en référence aux figures annexées parmi lesquelles :
- la figure 1 montre de manière schématique un projecteur d'images selon l'art connu, dans lequel seul un réseau de lentilles est utilisé pour homogénéiser le faisceau incident :
. la figure 1a illustre le dispositif employé ;
. la figure 1b montre la distribution d'éclairement obtenu avec le dispositif de la figure 1a.
- la figure 2 montre de manière schématique dans le cadre de l'art antérieur cité, l'éclairement inhomogène obtenu à partir d'une lentille du réseau de xy lentilles ;
- la figure 3 montre de manière schématique dans la cadre d'un projecteur d'images selon l'invention, utilisant deux réseaux de lentilles, l'éclairement homogène obtenu à partir d'un couple de lentilles (Lij1) et (Lij2) ;
- la figure 4 montre de manière schématique un projecteur d'images selon l'invention utilisant deux réseaux de lentilles ;
- la figure 5 montre de manière schématique un projecteur d'images selon l'invention dans lequel la source est réfléchie à l'aide de deux miroirs sphériques ;

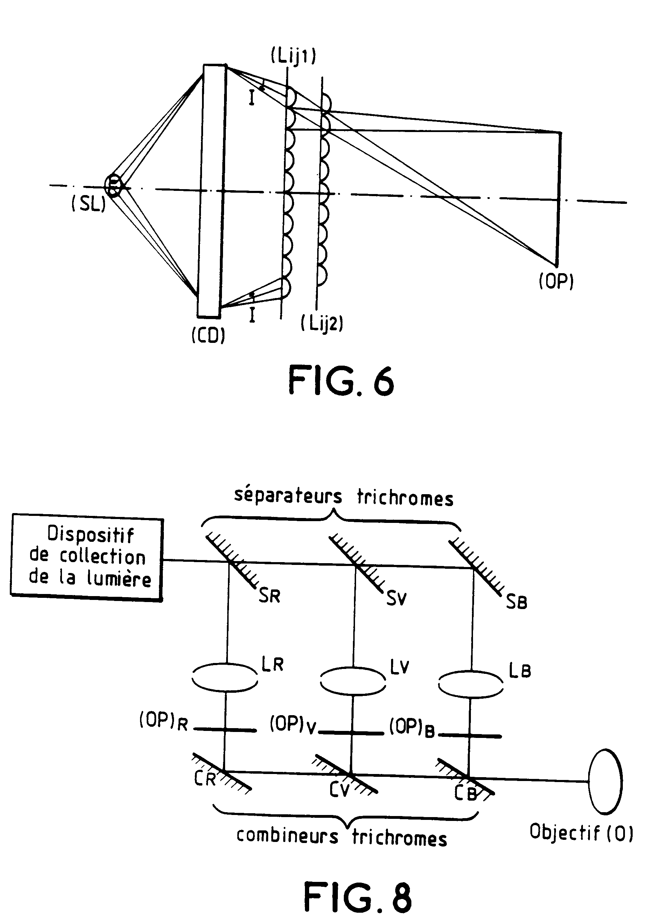

- la figure 6 montre de manière schématique un projecteur d'images selon l'invention dans lequel le condenseur de lumière génère des faisceaux convergents ne nécessitant plus l'emploi d'une lentille de champ (L) ;
- la figure 7 montre un exemple de réalisation de projecteur d'images, la collection de lumière étant utilisée pour projeter un écran à cristaux liquides au format 16/9 ;
- la figure 8 illustre la projection d'un écran à cristal liquide utilisant le dispositif de collection de la lumière de la figure 4. Des séparateurs trichromes et des combineurs trichromes permettent de projeter en couleur l'écran à cristaux liquides ;
- la figure 9 montre une seconde variante de dispositif selon l'invention utilisant un miroir couplé à un réseau de lentilles.

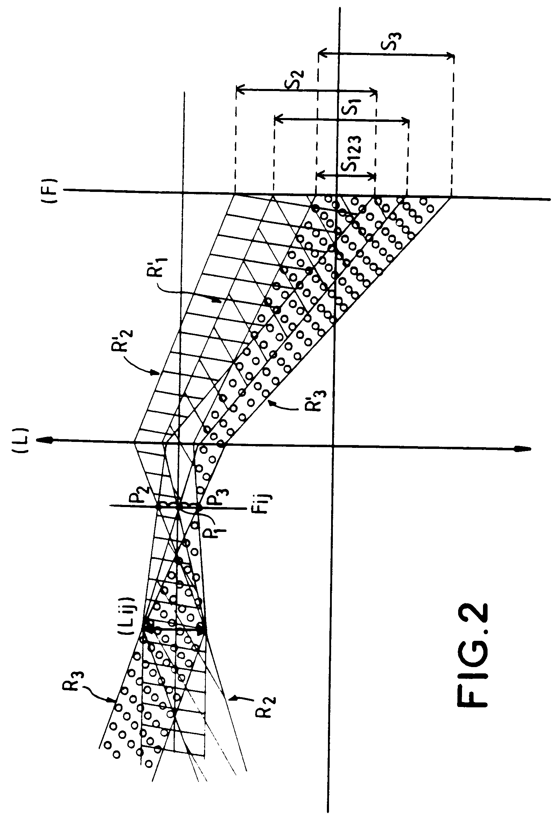

Selon l'art connu il est possible à partir d'une source lambertienne de générer par l'intermédiaire d'un miroir concentrique ou parabolique ou bien encore d'un condenseur, un faisceau lumineux semblant venir de l'infini. La figure 1 illustre un exemple de collecteur de lumière pour projecteur d'images utilisant un condenseur. Dans cet exemple le faisceau incident arrive sur un réseau de lentilles convergentes, chaque lentille formant l'image de la source en son foyer puisque tout se passe comme si la source avait été renvoyée à l'infini. La source ayant une certaine étendue elle semble être vue sous un certain angle I. La figure 2 montre qu'un faisceau parallèle à l'axe optique de la lentille (Lij), issu du centre de la source génère un point image P1.

De ce point image P1 correspondant à un nouveau point source part un faisceau lumineux R'1 qui après passage au travers d'une lentille de champ (L) crée une zone d'éclairement S1 dans le plan focal F de la lentille (L). De même un point extrême de la source génère un faisceau incident R2 qui au travers de la lentille (Lij) vient s'imager au point P2. De ce nouveau point source part un faisceau R'2 qui après passage au travers de la lentille de champ (L) crée la zone d'éclairement S2 dans le plan focal F. L'autre point extrême de la source génère un faisceau incident R3 qui au travers de la lentille (Lij) crée le point image P3. De ce nouveau point source est issu le faisceau lumineux R'3 qui après passage dans la lentille L crée une zone d'éclairement S3. La figure 2 montre bien que seule une zone S123 correspondant à une partie de la zone S1 est homogène en flux lumineux.

Chaque lentille (Lij) génère des zones d'éclairement confondues avec les zones S1, S2, S3 clans le plan focal F de la lentille (L), il en résulte un éclairement d'intensité maximale uniquement dans la zone S123.

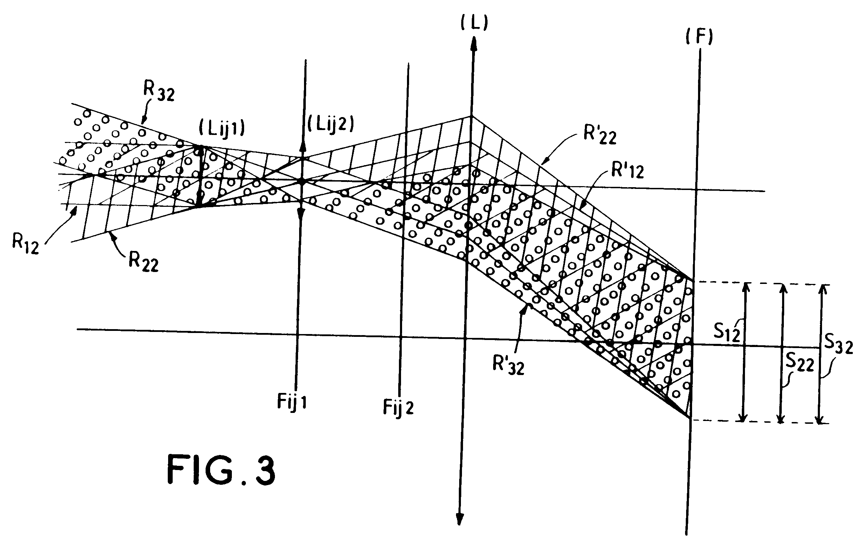

Selon l'invention en ajoutant au dispositif précédent de l'art connu un deuxième réseau de lentilles (LiJ2) dans le plan focal du premier réseau de lentilles (Lij1) le recouvrement des zones S12, S22 et S33 (correspondant respectivement aux zones S1, S2 et S3 de la figure 1) devient total. La figure 3 montre que les faisceaux lumineux R'12, R'22 et R'32 issus des points source P12, P22 et P32 constituent des zones d'éclairement S12, S22 et S32 dans le plan focal F de la lentille (L).

Ces zones S12, S22 et S32 étant confondues, l'éclairement est parfaitement homogène et l'efficacité lumineuse est considérablement accrue puisque les flux lumineux (S2-S123) et (S3-S123) de la figure 2 ne sont plus à exclure au point de vue éclairement homogène.

Exemple de projecteur d'images pour écran à cristaux liquides utilisable en télévision.

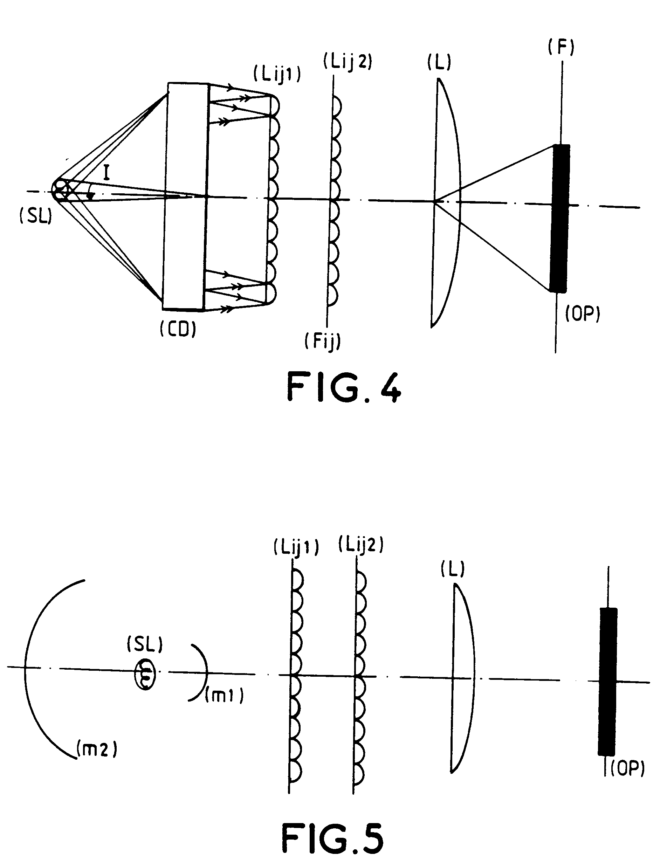

Selon l'invention on peut réaliser un projecteur d'images utilisant le collecteur de lumière décrit ci-dessus. La figure 4 illustre un exemple de réalisation de projecteur utilisant 2 réseaux de lentilles (Lij1) et (Lij2). Une source lumineuse (SL) lambertienne pouvant être une lampe à arc (de type halogène métallique) vient irradier un condenseur de lumière (Cd) dont sont issus des faisceaux lumineux semblant venir de l'infini.

Un premier réseau de lentilles (Lij1) vient former xy images de la source sur les xy lentilles du second réseau de lentilles (Lij2) placées dans le plan focal des premières lentilles (Lij1). Les xy images des premières lentilles (Lij1) sont rigoureusement projetées à l'infini, elles peuvent être ramenées à distance finie par l'intermédiaire d'une lentille de champ L. On place alors l'objet à projeter (OP) dans le plan focal de cette lentille de champ, la lentille et l'objet à projeter étant centrés sur le réseau de lentilles et sur la source. Il est alors possible de disposer après l'objet, un objectif de projection (O) puis un écran (non représenté). Dans le cas d'un écran à cristaux liquides (correspondant à l'objet à projeter), chaque point de l'écran à cristal liquide est ainsi éclairé de façon homogène. La lumière alors modulée par l'écran à cristaux liquides peut ensuite être captée par l'objectif de projection (O).

La figure 5 illustre un autre exemple de projecteur d'images selon l'invention dans lequel la collection de la lumière se fait à l'aide de deux miroirs concentriques (m1) et (m2) situés de part et d'autre de la source. Cette réalisation est intéressante en ce que tout l'angle solide sous lequel émet la lampe peut être collecté. Elle est généralement inutilisée car elle génère une zone sombre au centre du faisceau. Mais dans le cas où l'on utilise les réseaux de lentilles (Lij1) et (LiJ2) et une lentille de champ (L) cette zone sombre n'apparaît plus dans l'éclairement de l'objet à projeter.

La figure 5 montre une simplification des dispositifs préalablement décrits dans lesquels une lentille de champ (L) est nécessaire. Il est possible de rendre le faisceau fourni par les miroirs de collection de la source convergent vers l'objet à projeter. Dans ce cas on rend les réseaux de lentilles (Lij1) et de lentilles (Lij2) homothétiques l'un de l'autre, le centre de l'homothétie étant le centre de l'objet à projeter. La distance entre les réseaux et la focale des lentilles (LiJ2) sont choisies de manière à réimager chacune des lentilles (Lij1) sur l'objet à projeter.

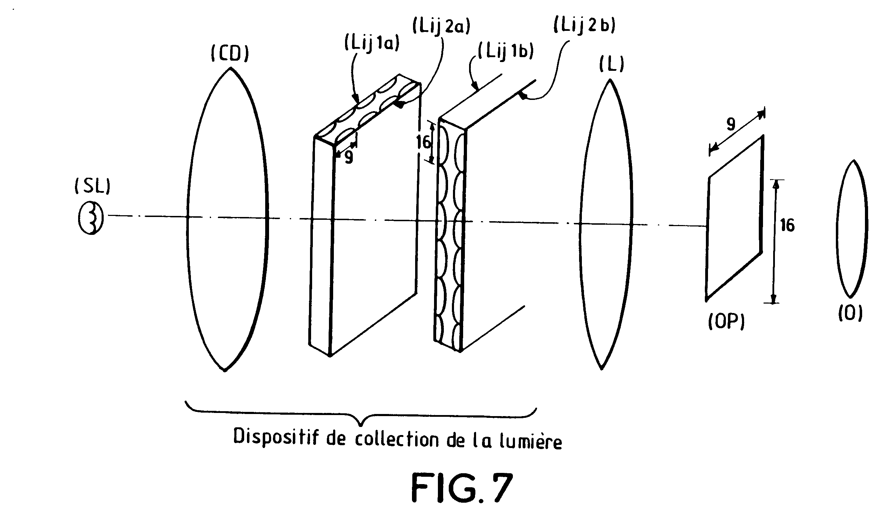

Pour éclairer parfaitement l'écran à cristaux liquides de préférence au format 16/9, il est important que l'éclairement homogène réalisé grâce au collecteur selon l'invention ait ce même format. Pour générer ainsi des images au format 16/9, on peut utiliser 2 couples de réseaux de lentilles cylindriques. Deux réseaux de lentilles cylindriques de génératrice a (Lij1a) et (Lij2a), sont couplés à deux réseaux de lentilles cylindriques de génératrice b (Lij2a) et (Lij2b), les génératrices a et b étant perpendiculaires. Les réseaux (Lij2a) et (Lij2b) sont respectivement dans les plans focaux des réseaux de lentilles (Lij1a) et (Lij1lb). La base des lentilles cylindriques de génératrice a et la base des lentilles de génératrice b étant dans un rapport 16/9 dans le cas d'un écran à cristaux liquides 16/9. La figure 7 illustre un tel dispositif.

Plus précisément les réseaux de lentilles peuvent être obtenus par pressage ou moulage de polymères.

On peut réaliser quatre profilés de lentilles identiques deux à deux. La dimension des lentilles pouvant être comprise entre le millimètre et le centimètre, les distances focales étant de l'ordre 10 à 20 mm il est possible d'envisager de constituer des réseaux de plusieurs dizaines de lentilles. La distance entre deux réseaux (Lij1a) et (Lij1b) ou (Lij2a) et (Lij2b) peut être de l'ordre de la distance focale des lentilles. Un tel dispositif conduit à un facteur 3 pour l'efficacité du collecteur par rapport à l'art antérieur cité.

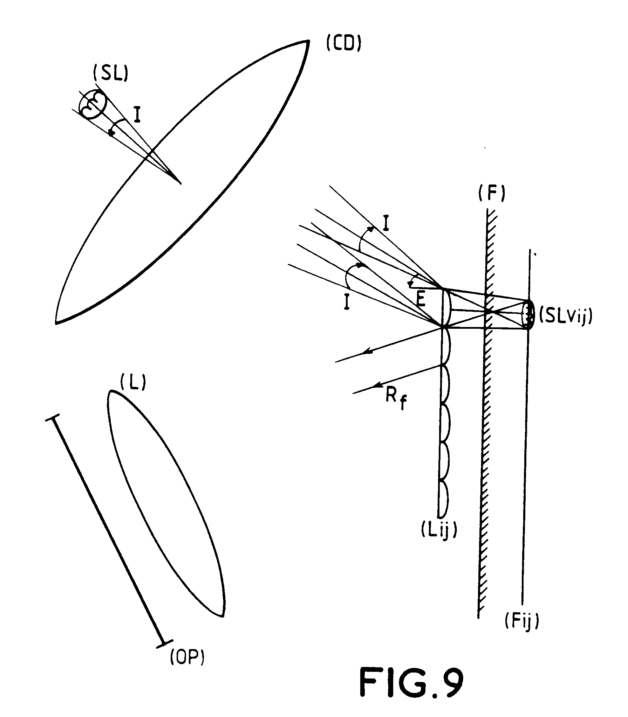

Pour projeter en couleur l'écran à cristaux liquides on peut utiliser le dispositif de collection de la lumière décrit à la figure 4. En sortie de ce dispositif on emploie des séparateurs trichromes réfléchissant respectivement le rouge (séparateur SR), le vert (séparateur SV) ou le bleu (séparateur SB). En sortie de ces trois séparateurs les lumières homogènes rouge, verte ou bleue viennent éclairer des écrans à cristaux liquides (OP)R, (OP)V et (OP)B, ces lumières modulées en sortie par les différents points des écrans, sont alors recombinées grâce à des combineurs trichromes qui ainsi restituent les faisceaux lumineux transmis vers l'objectif de projection (O) (figure 8).

Dans une seconde variante de l'invention on utilise non plus un second réseau de lentilles (Lij2) mais un miroir (M) situé à un mi distance du réseau de lentilles (Lij) et du plan focal de ces lentilles. Pour éviter que soient confondus les faisceaux incidents issus de la source et ceux réfléchis par le miroir, on fait arriver les faisceaux incidents sous un certain angle d'incidence E défini dans le plan normal au miroir. Cet angle peut être choisi de façon à ce que le faisceau réfléchi émerge par une lentille voisine. La figure 9 illustre cette seconde variante de collecteur de lumière selon l'invention.

Le miroir (M) est situé à mi-distance du réseau de lentilles (Lij) et de leur plan focal (Fij). Chaque lentille Lij est éclairée de manière relativement homogène par la source dont l'étendue angulaire définie par l'angle I est suffisamment faible pour venir s'imager en (SLij) à l'intérieur de l'image de la lentille au travers du miroir. Chaque lentille (Lij) forme à l'infini l'image de cet éclairement homogène vu au travers du miroir schématisé par le faisceau (Rf) de la figure 9. La somme de ces éclairements conduit à la même distribution d'éclairement que celle construite à la figure 3.

De même que pour la première variante de l'invention, il est possible d'obtenir un format 16/9 d'éclairement lorsque le collecteur de lumière est destiné à la projection d'un écran à cristaux liquides au format 16/9. Dans ce cas on peut utiliser deux réseaux de lentilles (Lija) et (Lijb) respectivement couplés à deux miroirs (Ma) et (Mb). Chaque miroir est disposé dans un plan parallèle au réseau de lentilles auquel il est couplé. Les génératrices a des lentilles (Lija) sont perpendiculaires aux génératrices b des lentilles (Lijb).

L'ensemble A = (Lija) - (Ma) et l'ensemble B = (Lijb) -(Mb) sont orientés orthogonalement pour assurer le format rectangulaire. En sortie de ces deux ensembles une lentille de champ (L) permet de ramener à distance finie l'éclairement homogène sur l'objet à projeter (OP).

Dans le cas d'un projecteur pour écran à cristaux liquides ce dispositif de collection s'adapte également parfaitement à la réalisation d'une projection en couleur de l'écran à cristaux liquides.

Ainsi en sortie des couples définis par un réseau de lentilles et un miroir, on peut disposer trois séparateurs trichromes suivis de trois lentilles de champ puis de trois matrices à cristaux liquides, en sortie desquelles les faisceaux de couleur sont recombinés par trois combineurs trichromes pour venir illuminer l'objectif de projection (O).

## Revendications

1. Projecteur d'images comportant au moins une source de lumière, (la source produisant une lumière destinée à éclairer un objet à projeter ayant une forme donnée), un premier réseau de lentilles (Lij1) au format de l'objet à éclairer et un système optique pour diriger sur l'objet le flux lumineux issu de chacune des lentilles caractérisé en ce que, en vue d'homogénéiser l'éclairement de l'objet sans perdre de flux lumineux on place derrière le premier réseau de lentilles un deuxième réseau de lentilles (Lij2) situé dans le plan focal du premier réseau de lentilles (Lij1), chaque lentille du second réseau ayant son axe optique confondu avec celui d'une lentille du premier réseau et chaque lentille (Lij1) a la même focale que chaque lentille (Lij2).

2. Projecteur d'images comportant au moins une source de lumière, la source produisant une lumière destinée à éclairer un objet à projeter ayant une forme donnée caractérisé en ce qu'il comporte un premier réseau de lentilles identiques (Lij) au format de l'objet à éclairer et un miroir (M), le miroir étant situé à mi-distance des lentilles (Lij) et de leur plan focal, de façon à imager les lentilles (Lij) sur l'objet à projeter.

3. Projecteur d'images selon la revendication 1, caractérisé en ce que les lentilles (LiJ2) ont le format de l'objet à projeter.

4. Projecteur d'images selon la revendication 1 caractérisé en ce que le format des lentilles (Lij1) est un format rectangulaire.

5. Projecteur d'images selon la revendication 3, caractérisé en ce que le format des lentilles (Lij2) est rectangulaire.

6. Projecteur d'images selon l'une des revendications 4 et 5, caractérisé en ce que le format rectangulaire des lentilles est obtenu par addition de deux réseaux successifs de lentilles cylindriques ((Lij1a) et (Lij2a) de génératrice a et de deux réseaux successifs de lentilles cylindriques (Lij1b) et (Lij2b) de génératrice b, les génératrices a et b étant perpendiculaires.

7. Projecteur d'images selon la revendication 2, caractérisé en ce que la direction du faisceau incident fait un angle E non nul avec la normale au plan du réseau de lentilles (Lij) de façon à ce que le faisceau incident et le faisceau réfléchi sur le miroir (M) soient séparés spatialement.

8. Projecteur d'images selon l'une des revendications 2 et 7, caractérisé en ce que les lentilles (Lij) ont le format de l'objet à projeter.

9. Projecteur d'images selon la revendication 8, caractérisé en ce que le format des lentilles (Lij) est un format rectangulaire.

10. Projecteur d'images selon la revendication 9, caractérisé en ce que le format rectangulaire des lentilles est obtenu par addition d'un ensemble A constitué d'un réseau de lentilles cylindriques (Lija) de génératrice a, couplé à un miroir Ma et d'un ensemble B constitué d'un réseau de lentilles cylindriques (Lijb) de génératrice b couplé à un miroir Mb, les génératrices a et b étant perpendiculaires.

réseau de lentilles

(L)

(F)

(SL)

I

I'

(OP)

I'

(Cd)

# FIG.1a

densité
d'éclairement

(I')

# FIG.1b

FIG.2

FIG.3

EP 0 512 893 A1

FIG. 4

FIG.5

(Lij1)

(SL)

(CD)

(Lij2)

(OP)

# FIG. 6

séparateurs trichromes

Dispositif
de collection
de la lumière

SR          Sv          SB

LR          Lv          LB

(OP)R      (OP)v      (OP)B

CR          Cv          CB

combineurs trichromes

Objectif (O)

# FIG. 8

Dispositif de collection de la lumière

# FIG. 7

EP 0 512 893 A1

(SL)

I

(CD)

(F)

I

I

E

(SLvij)

$R_f$

(L)

(Lij)

(Fij)

(OP)

# FIG.9

EP 0 512 893 A1

**Office européen des brevets**

# RAPPORT DE RECHERCHE EUROPEENNE

Numero de la demande

EP 92 40 1214

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-4 769 750 (MATSUMOTO ET AL.) | 1,3-5 | G02B3/00 |
| Y | * colonne 1, ligne 65 - colonne 2, ligne 51; figure 1 * | 6 | G02F1/1335 |
| A | | 2,7-10 | |
| | --- | | |
| Y | US-A-3 899 778 (ROBERTS) | 6 | |
| | * colonne 2, ligne 10 - ligne 55; figures 1,5 * | | |
| | --- | | |
| A | EP-A-0 022 506 (ERWIN SICK GMBH) | 1 | |
| | * page 1, ligne 21 - page 2, ligne 15; figure * | | |
| | --- | | |
| A | PATENT ABSTRACTS OF JAPAN vol. 7, no. 134 (P-203)(1279) 11 Juin 1983 & JP-A-58 050 510 ( MIKASA K.K. ) 25 Mars 1983 * abrégé * | 1 | |
| | --- | | |
| A | EP-A-2 843 798 (CANON K.K.) * revendication 1; figure 4 * | 2,7-11 | |
| | ----- | | |

|  | DOMAINES TECHNIQUES RECHERCHES (Int. Cl.5) |
|---|---|
| | G02B G02F |

Le présent rapport a été établi pour toutes les revendications

| Lieu de la recherche | Date d'achèvement de la recherche | Examinateur |
|---|---|---|
| LA HAYE | 07 AOUT 1992 | GRUNFELD M.Y. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

14